# EUROPÄISCHE PATENTSCHRIFT

(11) **EP 3 288 488 B1**
(45) Veröffentlichungstag und Bekanntmachung des Hinweises auf die Patenterteilung: **09.03.2022**
(21) Anmeldenummer: 16724293.2
(22) Anmeldetag: 27.04.2016
(51) Int. Cl.: A61C 9/00

(54) **ABFORMLÖFFEL**
IMPRESSION TRAY
PORTE-EMPREINTE

(30) Priorität: 27.04.2015 DE 102015106471
(43) Veröffentlichungstag der Anmeldung: 07.03.2018
(73) Patentinhaber: Oelmez, Ali, 87463 Dietmannsried (DE); Oelmez, Tancu, 87435 Kempten (DE); Oelmez, Altug, 87463 Dietmannsried (DE)
(72) Erfinder: Oelmez, Ali, 87463 Dietmannsried (DE); Oelmez, Tancu, 87435 Kempten (DE); Oelmez, Altug, 87463 Dietmannsried (DE)
(74) Vertreter: Patentanwälte Olbricht, Buchhold, Keulertz Partnerschaft mbB
(86) Internationale Anmeldenummer: PCT/EP2016/059430
(87) Internationale Veröffentlichungsnummer: WO 2016/174101

(56) Entgegenhaltungen:
- WO-A1-90/14052
- DE-C1- 4 304 421
- KR-U- 20100 008 774
- US-A- 3 736 663
- US-A- 4 484 890
- US-A- 5 961 325
- US-B1- 6 428 315

## Beschreibung

Die Erfindung betrifft einen Abformlöffel zum Erstellen eines zu einer Zahnreihe, einem Zahnreihenabschnitt oder einem Zahns eines menschlichen oder tierischen Kiefers komplementären Abdrucks.

Derartige Abformlöffel werden regelmäßig von Zahnärzten verwendet, um einen Abdruck einer Zahnreihe zu erstellen, auf dessen Basis dann ein Zahnersatz erstellt oder eine andere zahnmedizinische Maßnahme durchgeführt werden soll.

Gattungsgemäße Abformlöffel weisen häufig eine längliche gebogene Vertiefung auf, welche der Form und Biegung einer menschlichen oder tierischen Zahnreihe nachempfunden ist. Dabei ist eine solche Vertiefung regelmäßig deutlich großvolumiger ausgeführt als die abzuformende Zahnreihe, um zwischen der Vertiefung und der Zahnreihe noch Platz für Abformmaterial zu haben. US6428315B1 offenbart einen solchen Abformlöffel. DE4304421 C1 und WO9014052 A1 offenbaren individuelle zahntechnische Abformlöffel und Verfahren zu deren Herstellung.

Abformlöffel werden regelmäßig mit Abformmaterial befüllt, über die abzuformende Zahnreihe gestülpt und angedrückt. Anschließend kann sich das Abformmaterial verhärten, so dass es eine zur Zahnreihe komplementäre Oberflächenstruktur aufweist. Wenn das Abformmaterial verhärtet ist, wird der Abformlöffel abgezogen, wobei das Abformmaterial mit abgezogen werden soll.

Bei Abformlöffeln gemäß dem Stand der Technik hat es sich jedoch gezeigt, dass die Abformlöffel erheblich größer ausgeführt sein müssen als die Zahnreihe, von welcher ein Abdruck erstellt werden soll. Ist ein Abformlöffel zu klein, so dass zu wenig Abformmaterial zwischen Abformlöffel und Zahnreihe aufgenommen werden kann, so kann es vorkommen, dass das Abformmaterial nicht vollständig mit abgezogen wird. Dies führt dann dazu, dass einzelne, herausgebrochene Teile an der Zahnreihe verbleiben oder auch dazu, dass das verhärtete Abformmaterial beim Abziehen zerbricht. In beiden Fällen muss in der Regel der Arbeitsvorgang wiederholt werden.

Die eben beschriebene Erfordernis zur großen Dimensionierung des Abformlöffels führt jedoch dazu, dass eine erhebliche Menge an Abformmaterial benötigt wird. Dieses ist teuer, was die Behandlungskosten deutlich erhöht.

Es ist deshalb eine Aufgabe der Erfindung, einen Abformlöffel bereitzustellen, welcher insbesondere dahingehend verbessert ist, dass ein verbessertes Ergebnis hinsichtlich der abgeformten Zahnreihen, Zahnreihenabschnitte oder Zähne erzielt wird, das Abformmaterial besser mit abgezogen wird und/oder dass weniger Abformmaterial benötigt wird.

Dies wird erfindungsgemäß durch einen Abformlöffel gemäß Anspruch 1 erreicht. Vorteilhafte Ausgestaltungen sind Gegenstand der abhängigen Ansprüchen.

Die Erfindung betrifft einen Abformlöffel zum Erstellen eines zu einer Zahnreihe eines menschlichen oder tierischen Kiefers komplementären Abdrucks. Der Abformlöffel weist eine Innenwand auf, welche eine längliche gebogene Vertiefung zur Aufnahme von Abformmaterial bildet.

Es ist vorgesehen, dass die Innenwand zumindest eine Hinterschneidung aufweist.

Mittels der Hinterschneidung wird erreicht, dass das im Abformlöffel befindliche Abformmaterial, insbesondere bereits verhärtetes Abformmaterial, durch die Hinterschneidung formschlüssig gehalten wird und somit mit dem Abformlöffel besser mit abgezogen wird. Die Hinterschneidung ist dabei vorzugsweise so ausgerichtet, dass sie in die Vertiefung eingedrücktes Material mit herauszieht. Hierzu kann sie beispielsweise zu einer Wölbung der Vertiefung hin ausgerichtet sein.

Das verbesserte Abziehen des Abformmaterials durch die Hinterschneidung führt insbesondere dazu, dass der Abformlöffel kleiner ausgebildet sein kann als ein Abformlöffel gemäß dem Stand der Technik, wenn er für die gleiche Zahnreihe vorgesehen sein soll. Dies spart eine erhebliche Menge an Abformmaterial ein und verringert somit die Behandlungskosten.

Es ist außerdem vorgesehen, dass die Vertiefung zumindest teilweise im Wesentlichen formkomplementär zu der abzuformenden Zahnreihe, dem Zahnreihenabschnitt oder dem Zahn ausgebildet ist. Dies erleichtert die typischerweise vorgesehene Verwendung und verbessert zudem die Qualität der Abformung und detailliertere Ausbildung des Abdrucks.

Es ist vorgesehen, dass die Hinterschneidung an einer Mehrzahl von in der Innenwand ausgebildeten seitlichen Ausbuchtungen angeordnet ist. Derartige Ausbuchtungen sind in Form seitlicher Taschen ausgebildet , wobei diese auch Abformmaterial aufnehmen können. Damit wird zum einen mehr Abformmaterial in der Vertiefung aufgenommen. Zum anderen wird auch das Abziehen des Abformmaterials erleichtert.

Die Ausbuchtungen erhöhen jedoch auch den Staudruck beim Einsetzen des Abformlöffels und begünstigen dabei die verbesserte und gleichmäßigere Verteilung des Abformmaterials um und an der abzuformenden Partie des Kiefers bzw. den Zahnreihenabschnitten, Zahnreihen, Zähnen oder Kieferquadranten. Hierdurch wird die Detailgenauigkeit erhöht und das Abdruckergebnis verbessert. Dies führt wiederum im Endergebnis letztlich zur bezüglich der abzuformenden Kieferteile formtreueren Wiedergabe von deren Ausgestaltung am fertigen Modell.

Es sei erwähnt dass auch wenn in den Ausbuchtungen zusätzliches Abformmaterial aufgenommen wird, der durch eine Verkleinerung des Abformlöffels erreichbare Effekt der Einsparung von Abformmaterial überwiegt.

Die Hinterschneidung ist dabei bevorzugt an einer Seite der Ausbuchtungen ausgebildet, welche zu einer geschlossenen und/oder gewölbten Seite der Vertiefung hin ausgerichtet ist. Dies begünstigt die oben erwähnte Funktionalität in vorteilhafter Weise.

Die Hinterschneidung ist über eine Mehrzahl von benachbarten Ausbuchtungen ausgebildet, wobei die Ausbuchtungen auf gleicher Höhe liegen können und erfindungsgemäß jede Ausbuchtung einem Zahn der Zahnreihe zugeordnet sein kann.

Gemäß einer Ausführung ist vorgesehen, dass jeweils zwei Ausbuchtungen in der Vertiefung paarweise gegenüberliegend angeordnet sind. Beispielsweise kann jede Ausbuchtung einem Zahn der Zahnreihe zugeordnet sein. Durch eine solche Ausführung kann eine Haltewirkung der jeweiligen Ausbuchtung beziehungsweise der Hinterschneidung gerade an den relevanten, einem jeweiligen Zahn zugeordneten Positionen erhöht werden.

Es sei an dieser Stelle erwähnt, dass eine Bezugnahme auf Zähne einer Zahnreihe insbesondere derart zu verstehen ist, dass Zähne einer Zahnreihe gemeint sind, welche nach Größe und Form dazu geeignet sind, dass ein Abdruck mit dem Abformlöffel erstellt wird. Insbesondere kann es sich dabei um menschliche oder tierische Zahnreihen handeln. Diese sind biologisch festgelegt, so dass eine Bezugnahme auf eine Zahnreihe in dieser Anmeldung eine klare technische Angabe darstellt.

Es ist vorgesehen, dass die Hinterschneidung einen oberen Abschluss der Ausbuchtungen ausbildet. Dies ermöglicht besonders vorteilhaft die oben beschriebene Funktionalität. Unter der Lagebezeichnung "oben" kann dabei insbesondere "näher an einer Öffnung der Vertiefung" verstanden werden.

Gemäß einer Ausführung ist vorgesehen, dass zumindest einige der Ausbuchtungen jeweils zu einer Außen- und/oder Innenseite des Abformlöffels hin ausgebildet sind. Dies ermöglicht eine partielle seitliche Verbreitung an den Ausbuchtungen. Unter einer Innenseite wird dabei insbesondere eine Seite verstanden, welche zu einem anderen Abschnitt des Abformlöffels hinweist. Unter einer Außenseite wird hingegen insbesondere eine Seite verstanden, welche nicht zu einem anderen Abschnitt des Abformlöffels hinweist.

Gemäß einer Ausführung ist vorgesehen, dass zumindest einige der Hinterschneidungen an eine Aufwölbung der Innenwand angrenzen, welche sich zwischen der Hinterschneidung und einer Außenkante des Abformlöffels erstreckt.

Eine solche Aufwölbung kann insbesondere komplementär zum Zahnfleisch, beispielsweise zu einem menschlichen Zahnfleisch ausgebildet sein. Sie ermöglicht die Aufnahme einer ausreichenden Menge an Abformmaterial, um das Zahnfleisch zumindest teilweise mit abzuformen.

Gemäß einer Ausführungsform ist vorgesehen, dass die Hinterschneidung an einer Außenkante des Abformlöffels ausgebildet ist. Damit wird typischerweise das gesamte im Abformlöffel enthaltene Abformmaterial von der Hinterschneidung mit abgezogen.

Die Anmeldung umfasst auch gleichermaßen die Kombination der beiden beschriebenen Ausführungsformen, wodurch eine besonders vorteilhafte Mitnahmewirkung erreicht werden kann.

Gemäß einer Ausführung ist vorgesehen, dass zwei gegenüberliegende Hinterschneidungen an gegenüberliegenden Außenkanten des Abformlöffels ausgebildet sind. Dies erzeugt ähnliche, jeweils vorteilhafte Mitnahmewirkungen an beiden Hinterschneidungen.

Gemäß einer Ausführung ist vorgesehen, dass eine oder mehrere Hinterschneidungen und/oder an die eine oder mehrere Hinterschneidungen angrenzenden Bereiche des Abformlöffels aus einem weicheren Material als der Rest des Abformlöffels ausgebildet sind. Dies kann das Entnehmen des verhärteten Abformmaterials nach Entnahme des Abformlöffels erleichtern. Außerdem führt es zu einer angenehmeren Anlage des Abformlöffels am Zahnfleisch.

Gemäß einer Ausführung ist vorgesehen, dass zwei gegenüberliegende Hinterschneidungen eine lichte Weite der Ausbuchtungen und/oder der Vertiefung reduzieren. Dies kann insbesondere die Mitnahmewirkung in vorteilhafter Weise erzeugen. Auch wir das Abformergebnis durch eine hierdurch erreichbare günstigere Umschichtung des abzuformenden Teils detailreicher und damit wesentlich verbessert.

Gemäß der Erfindung ist, wie bereits ausgeführt vorgesehen, dass die Vertiefung zumindest teilweise im Wesentlichen formkomplementär zu einer menschlichen Zahnreihe ausgebildet ist.

Gemäß der Erfindung ist vorgesehen, dass die Vertiefung untenseitig eine Anzahl von Taschen aufweist. Diese können insbesondere jeweils zumindest teilweise im Wesentlichen formkomplementär zu einem künstlichen oder natürlichen menschlichen Zahn, einer Zahnreihe oder einem Zahnreihenabschnitt ausgebildet sein. Dies kann das Abformergebnis verbessern.

Gemäß einer Ausführung ist vorgesehen, dass jedem Zahn einer idealen menschlichen Zahnreihe jeweils eine Tasche zugeordnet ist.

Bei einer menschlichen Zahnreihe kann es sich grundsätzlich sowohl um eine Zahnreihe mit Weisheitszähnen wie auch um eine Zahnreihe ohne Weisheitszähne oder nur mit einem Teil der Weisheitszähne handeln.

Gemäß einer Ausführung ist vorgesehen, dass zumindest einige der Taschen jeweils mehrere, bevorzugt bis zu vier Teilauswölbungen um einen zwischen diesen Teilauswölbungen mittig angeordneten, zum Inneren der Vertiefung vorstehenden Vorsprung aufweisen. Damit sind sie im Wesentlichen komplementär zur Form von typischen Backenzähnen. Derartig ausgestaltete Taschen können deshalb vorzugsweise im Bereich von Backenzähnen einer menschlichen Zahnreihe vorgesehen sein.

Gemäß einer Ausführung ist vorgesehen, dass die Vertiefung und/oder der Abformlöffel insgesamt zumindest im Wesentlichen U-förmig ausgebildet ist. Dies entspricht der üblichen, natürlichen Form von Zahnreihen.

Gemäß einer Ausführung ist vorgesehen, dass dieser aus einem sterilisierbaren, insbesondere autoklavierbaren Material gebildet ist. Dies erleichtert die Keimtötung, da auf das bewährte Verfahren der Sterilisation zurückgegriffen werden kann.

Gemäß einer Ausführung ist vorgesehen, dass der Abformlöffel ganz oder abschnittsweise aus Kunststoff, insbesondere transparentem, teiltransparentem oder eingefärbtem Kunststoff, oder aus Metall, insbesondere aus Stahl, bevorzugt rostfreiem Stahl oder Metalllegierungen, ausgebildet ist. Derartige Materialien haben sich als vorteilhaft erwiesen. Als beispielhafte Kunststoffe genannt werden PPS (Polyphenylsulfid), PSU (Polysulfon), PEI und PEEK (Polyetheretherketon). Allen verwendeten Materialien, sowohl der Kunststoffe wie auch der Metalle bzw. Metalllegierungen ist gemein, dass diese für die Verwendung im Mundraum zugelassen sind. Die Kombination der vorgenannten Materialien ist selbstverständlich auch umfasst.

Die Erfindung ist nicht auf die vorgenannten Materialien beschränkt, sondern umfasst sämtliche dem Fachmann geläufigen und für die Verwendung im Mundraum zugelassenen und einsetzbaren Materialien und Materialpaarungen.

Gemäß einer Ausführung ist vorgesehen, dass der Abformlöffel im Wesentlichen einen U-förmigen Außenquerschnitt aufweist. Dies erleichtert die Verwendung in Zusammenhang mit einer typischerweise ebenfalls U-förmigen Zahnreihe.

Gemäß einer Ausführung ist vorgesehen, dass dieser ferner eine Mittenauswölbung aufweist, welche von der Vertiefung zumindest teilweise seitlich umgeben ist. Eine solche Mittenauswölbung kann insbesondere der Stabilisierung und der Anpassung an einen Kiefer dienen.

Gemäß einer Ausführung ist vorgesehen, dass an der Mittenauswölbung eine Halterung, bevorzugt ein Löffelstiel, angebracht ist. Dies erleichtert die Handhabung des Abformlöffels, insbesondere durch einen Zahnarzt.

Der erfindungsgemäße Abformlöffel dient zum Erstellen eines zu einer Zahnreihe, einem Zahnreihenabschnitt oder einem Zahns eines menschlichen oder tierischen Unter- oder Oberkiefers komplementären Abdrucks. Dabei ist die Ausgestaltung des Abformlöffels an die entsprechenden anatomischen Gegebenheiten des Unter- oder Oberkiefers angepasst. So weist beispielsweise der Abformlöffel für den Oberkiefer aien Aufwölbung auf, die währedn der Abformung am Gaumen anliegt. Diese Aufwölbung fehlt dem Abformlöffel für den Unterkiefer, der wiederum Raum für die Zunge einräumt. Die wesentliche Konfiguration der Abformlöffel hinsichtlich der Zahnreihen entspricht jedoch in jedem Fall der zuvor beschriebenen.

In einer bevorzugten Ausführungsform ist der Abformlöffel als Abformlöffelabschnitt ausgebildet, d.h. weist keine vollständig der Formgebung eines Kiefers nachgebildete Ausformung auf. Diese Ausführungsvariante eignet sich zum Erstellen eines zu einem Abschnitt der Zahnreihe, einer Zahngruppe oder eines Einzelzahns komplementären Abdrucks. Auch bei Unverträglichkeit des Patienten erlaubt diese Ausgestaltung eine abschnittsweise Abformung und nachträglichen Zusammensetzung der Formteile. Daneben gewährleistet die Verwendung von Abformlöffelabschnitten auch die detailgetreue Abformung von Einzelzähnen mit hoher Abformqualität.

Die Abformlöffelabschnitte können auch analog zur zahnärztlichen Aufteilung des Kiefers in Quadranten ausgebildet werden, d.h. für jeden der Quadranten I - IV kein ein eigener, für den jeweiligen Quadranten vorgesehener Abformlöffel zur Verfügung gestellt werden. Gleichermaßen möglich und denkbar ist es, Abformlöffel bzw. Abformlöffelabschnitte zur Verfügung zu stellen, die nur bestimmte Zähne einer Zahnreihe des Ober- bzw. Unterkiefers (z.B. der Schneidezähne, Eckzähne, Backenzähne, des frontalen Gebissabschnittes etc.) erfassen. Diese Ausgestaltung macht sich die Vorteile der zuvor geschilderten Erfindung zunutze und gewährleistet durch die erfindungsgemäße und ausführlich beschriebene Ausführung der Vertiefung ein verbessertes Abformergebnis und detailliertere Komplementärabformungen der Zähne bzw. Zahnreihen.

In der Zeichnung ist die Erfindung insbesondere in Ausführungsbeispielen schematisch dargestellt. Es zeigen:
- Fig. 1a, 1b, 1d: einen erfindungsgemäßen Abformlöffel gemäß einem ersten Ausführungsbeispiel in unterschiedlichen Ansichten,
- Fig. 1c: einen erfindungsgemäßen Abformlöffel gemäß einem zweiten Ausführungsbeispiel,
- Fig. 2: eine Draufsicht auf einen erfindungsgemäßen Abformlöffel gemäß einem dritten Ausführungsbeispiel,
- Fig. 3: einen Querschnitt durch einen erfindungsgemäßen Abformlöffel gemäß dem dritten Ausführungsbeispiel, welcher über einen Zahn übergestülpt ist,
- Fig. 4a und 4b: einen erfindungsgemäßen Abformlöffel gemäß einem vierten Ausführungsbeispiel in unterschiedlichen Ansichten,
- Fig. 5: eine Draufsicht auf einen erfindungsgemäßen Abformlöffel gemäß einem fünften Ausführungsbeispiel,
- Fig. 6: einen Querschnitt durch einen erfindungsgemäßen Abformlöffel gemäß einem sechsten Ausführungsbeispiel,
- Fig. 7: einen weiteren Querschnitt durch den erfindungsgemäßen Abformlöffel gemäß dem sechsten Ausführungsbeispiel.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

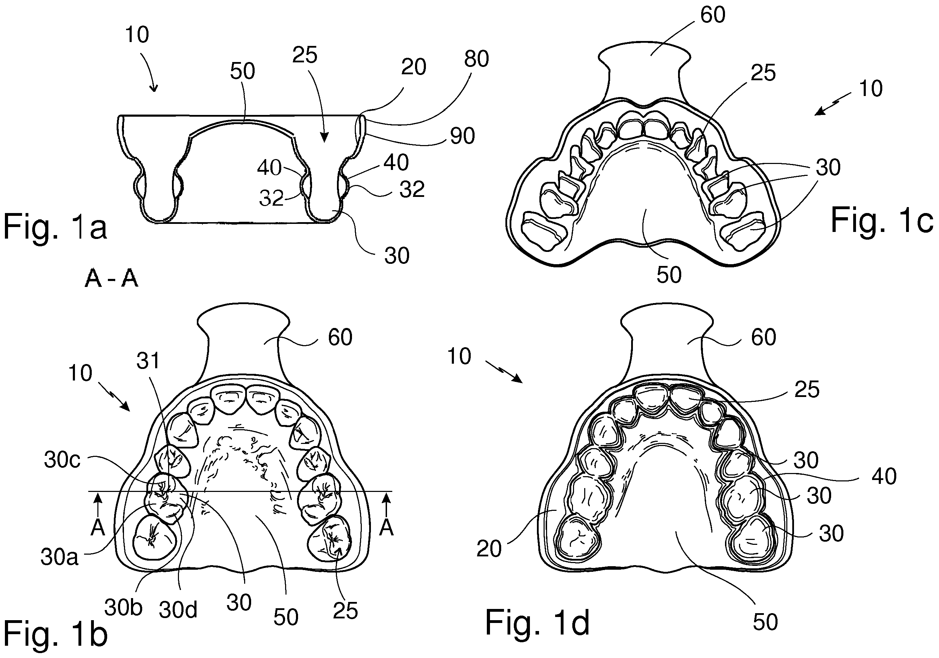

Die Figuren 1a, 1b und 1d zeigen einen Abformlöffel 10 gemäß einem ersten Ausführungsbeispiel, welcher insbesondere dafür ausgebildet ist, an einer oberen menschlichen Zahnreihe verwendet zu werden. Dabei zeigt Figur 1b eine Ansicht von unten, wohingegen Figur 1d eine Draufsicht zeigt. Die Lageangaben beziehen sich auf die typische Verwendung, hier also am Oberkiefer, wobei der Abformlöffel 10 typischerweise in der in Figur 1a dargestellten Lage verwendet wird.

Der Abformlöffel 10 weist eine Vertiefung 25 auf, welche von einer Innenwand 20 begrenzt ist. Die Vertiefung 25 ist im Wesentlichen komplementär zu einer menschlichen Zahnreihe ausgebildet. Hierzu ist sie in Draufsicht U-förmig ausgebildet, wie insbesondere aus den Figuren 1b und 1d ersichtlich ist. Auch im Querschnitt ist sie U-förmig ausgebildet, wie insbesondere aus Figur 1a ersichtlich ist.

An der in Figur 1a unteren Seite des Abformlöffels 10 sind Taschen 30 ausgebildet. Wie aus den anderen Figuren zu erkennen ist, sind diese insgesamt 12 Taschen 30 so angeordnet, dass jedem Zahn einer typischen menschlichen Zahnreihe eine der Taschen 30 zugeordnet ist.

In Figur 1b sind die Ausformungen der Taschen 30 detaillierter dargestellt. Diejenigen Taschen 30, welche menschlichen Backenzähnen zugeordnet sind, weisen jeweils vier Teilauswölbungen 30a, 30b, 30c, 30d auf, welche nach außen gerichtet sind. Diese sind um einen jeweiligen mittig dazwischen angeordneten, zum Inneren der Vertiefung 25 vorstehenden Vorsprung 31 herum angeordnet. Damit sind die Vertiefungen der typischen Form von menschlichen Backenzähnen angepasst, was ein besonders gutes Abformergebnis ermöglicht.

In der Innenwand sind des Weiteren eine Mehrzahl von Ausbuchtungen 32 angeordnet, welche jeweils paarweise zueinander angeordnet sind und sich jeweils zur Innenseite beziehungsweise zur Außenseite des Abformlöffels 10 erstrecken. Dies ist in Figur 1a zu erkennen.

Wie in den Figuren nicht explizit dargestellt ist, sind die Ausbuchtungen 32 derart in der Innenwand 20 angeordnet, dass jeder Tasche 30 eine Ausbuchtung 32 zugeordnet ist.

Oben an den Ausbuchtungen 32 ist jeweils eine Hinterschneidung 40 angeordnet. Anders ausgedrückt erstreckt sich eine jeweilige Hinterschneidung auf beiden, in Figur 1a zu sehenden Seiten der Vertiefung 25 über die jeweiligen mehreren Ausbuchtungen 32 hinweg.

Wenn der Abformlöffel 10 verwendet wird, so wird die Vertiefung 25 typischerweise mit Abformmaterial gefüllt. Diese ist in den Figuren nicht dargestellt. Anschließend wird der Abformlöffel samt der Abformmasse über die Zahnreihe gestülpt, so dass das Abformmaterial mit den Zähnen der Zahnreihe in Kontakt kommt. Der Abformlöffel 10 wird angedrückt und es wird gewartet, bis das Abformmaterial ausgehärtet ist.

Anschließend wird der Abformlöffel 10 wieder von der Zahnreihe abgezogen, wobei das ausgehärtete Abformmaterial in dem Abformlöffel 10 verbleiben soll. Die jeweilige Hinterschneidung 40 sorgt dabei dafür, dass das ausgehärtete Abformmaterial beim Abziehen in dem Abformlöffel 10 gehalten wird. Dabei wirkt die Hinterschneidung 40 insbesondere auf dasjenige Abformmaterial, welches sich in einer jeweiligen Ausbuchtung 32 beziehungsweise unmittelbar dazu benachbart befindet.

Innenseitig zur Vertiefung 25 weist der Abformlöffel 10 eine Mittenauswölbung 50 auf. Diese ist einem typischen menschlichen Kiefer angepasst und sorgt für eine sichere und angenehme Anlage des Abformlöffels 10 an den Kiefer.

Zwischen der nach außen weisenden Ausbuchtung 32 und einer Außenkante 80 des Abformlöffels 10 ist eine Aufwölbung 90 ausgebildet. Die Aufwölbung 90 ist komplementär zu einem menschlichen Zahnfleisch ausgeformt, so dass benachbart zur Außenkante auch ein vorteilhafter Abdruck des an die Zähne angrenzenden Teils des Zahnfleischs genommen werden kann.

Mittig am Abformlöffel 10 ist eine Halterung in Form eines Löffelstiels 60 angebracht. Dieser dient zum Halten des Abformlöffels 10, insbesondere während des Einsetzens und während des Herausnehmens. Er erleichtert die Handhabung des Abformlöffels 10 erheblich.

In Figur 1c ist ein Abformlöffel 10 gemäß einem zweiten Ausführungsbeispiel dargestellt. Dieser ist ähnlich wie der Abformlöffel gemäß dem ersten Ausführungsbeispiel ausgebildet, weist jedoch nicht 12, sondern 14 Taschen 30 auf. Damit können auch Weisheitszähne mit abgeformt werden. Ansonsten sei auf die Beschreibung des ersten Ausführungsbeispiels verwiesen.

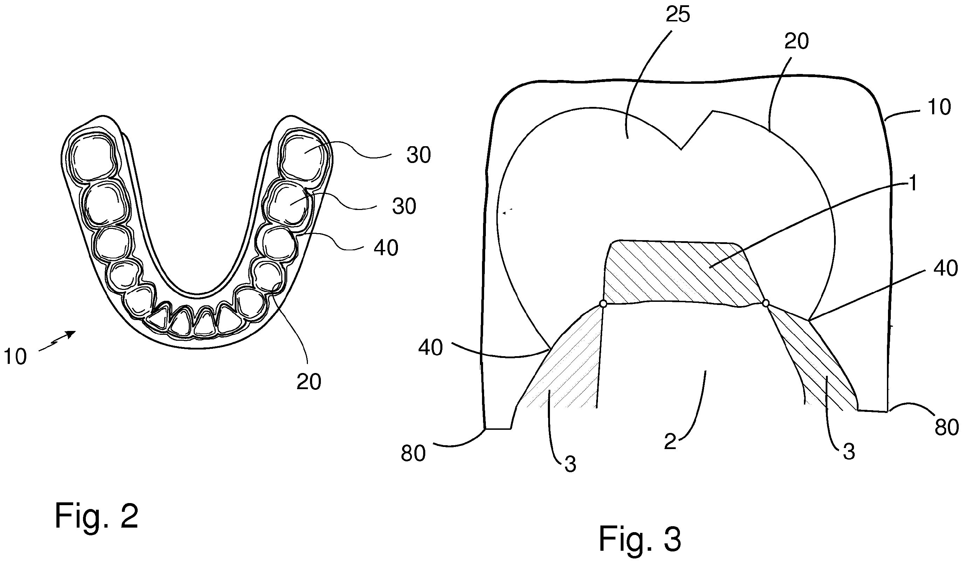

Figur 2 zeigt einen Abformlöffel 10 gemäß einem dritten Ausführungsbeispiel. Dieser unterscheidet sich von dem Abformlöffel 10 gemäß dem zweiten Ausführungsbeispiel insbesondere insofern, als er keine Mittenauswölbung und keinen Halterung aufweist. Er ist besonders für eine untere Zahnreihe geeignet, kann jedoch grundsätzlich auch für eine obere Zahnreihe verwendet werden. Ansonsten sei auf die Beschreibung zu den Figuren 1a bis 1d verwiesen.

Figur 3 zeigt einen Abformlöffel 10 gemäß dem dritten Ausführungsbeispiel, welcher über einen Zahn 1 gestülpt ist. Der Zahn 1 ist hier nur noch als Zahnstumpen vorhanden, weil er bereits teilweise abgeschliffen wurde. Von dem Zahnstumpen soll ein Abdruck erstellt werden. Der Zahn 1 ist mit einer Wurzel 2 in umgebendem Zahnfleisch 3 verankert.

Der Zahn 1 und das umgebende Zahnfleisch 3 sind in Figur 3 nur schematisch dargestellt. Die Hinterschneidung sowie die innere Formgebung der Vertiefung 25 beziehungsweise der Innenwand 20 sind deutlich zu erkennen. Es ist auch zu erkennen, dass die Hinterschneidung 40 im Wesentlichen am Zahnfleisch anliegt und im Falle eines Wegziehens des Abformlöffels 10 von Zahn 1 und Zahnfleisch 3 das zwischen Zahn 1 und Innenwand 20 befindliche, nicht dargestellte Abformmaterial in vorteilhafter Weise mit herauszieht. Durch die Hinterschneidung 40 wird das Herausziehen wie weiter oben bereits beschrieben verbessert, was das Risiko eines unvollständigen Herausziehens verringert. Deshalb kann der Abformlöffel 10 kleiner sein, d.h. enger um den Zahn 1 herum anliegen, was Abformmaterial und damit Kosten spart.

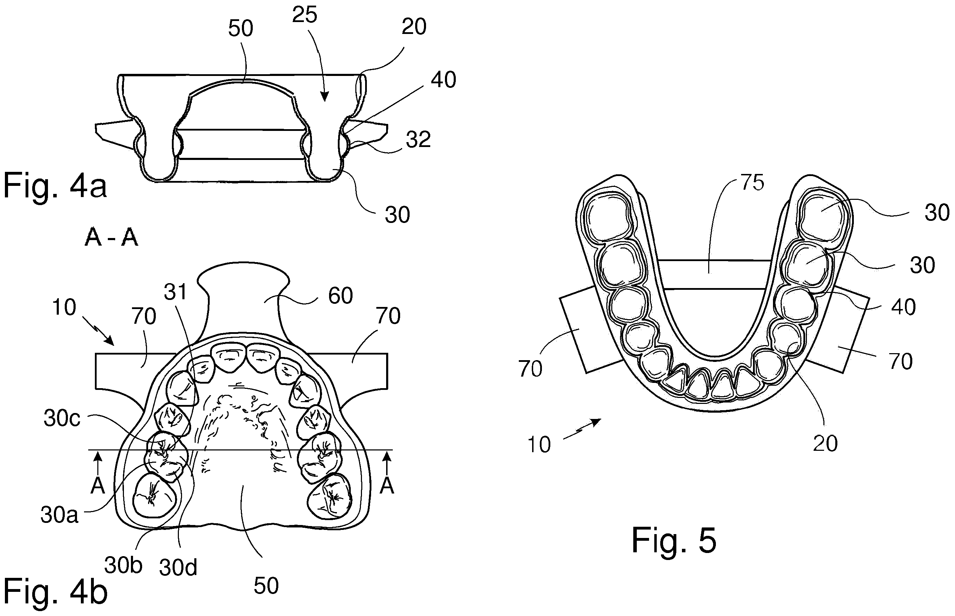

Die Figuren 4a und 4b zeigen einen Abformlöffel 10 gemäß einem vierten Ausführungsbeispiel. Im Unterschied zum ersten Ausführungsbeispiel weist der Abformlöffel 10 gemäß dem vierten Ausführungsbeispiel ein weiteres Haltemittel, nämlich eine Greifplatte 70 auf. Diese verbessert die Handhabung noch weiter, da der Abformlöffel 10 nicht nur an dem Löffelstiel 60, sondern auch an der Greifplatte 70 gehalten werden kann.

Der Abformlöffel 10 gemäß dem vierten Ausführungsbeispiel ist insbesondere für eine obere menschliche Zahnreihe geeignet.

Die Figur 5 zeigt einen Abformlöffel 10 gemäß einem fünften Ausführungsbeispiel. Im Unterschied zum vierten Ausführungsbeispiel ist beim Abformlöffel 10 gemäß dem fünften Ausführungsbeispiel die Greifplatte 70 anders geformt, wie in der Figur 5 gut zu erkennen ist. Des Weiteren befindet sich innenliegend der Vertiefung 25 anstelle der Mittenauswölbung 50 ein Steg 75. Auch dieser dient zum Greifen des Abformlöffels 10 und erleichtert die Handhabung. Ein Löffelstiel ist in dem Abformlöffel 10 gemäß dem fünften Ausführungsbeispiel nicht vorgesehen.

Der Abformlöffel 10 gemäß dem fünften Ausführungsbeispiel ist insbesondere für eine untere menschliche Zahnreihe geeignet. Bei einer solchen Verwendung kann beispielsweise die Zunge auf den Steg 75 gelegt werden.

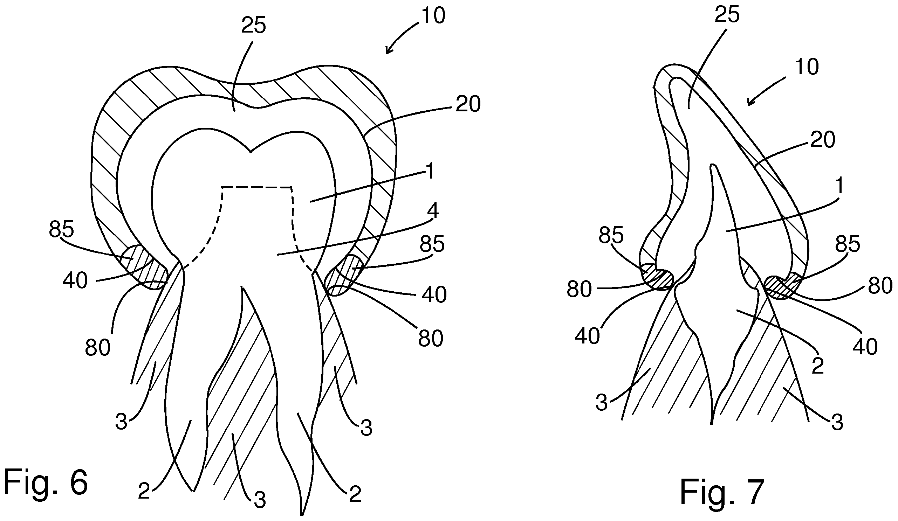

Die Figur 6 zeigt einen Abformlöffel 10 gemäß einem sechsten Ausführungsbeispiel. Dieser ist hier in einer Querschnittsansicht zusammen mit einem Zahn 1 und zugehörigem Zahnfleisch 3, worüber der Abformlöffel 10 gestülpt ist, gezeigt.

Der Zahn 1 ist hier vollständig dargestellt. Er ist mit seiner Wurzel 2 im Zahnfleisch 3 verankert. Mittels des Abformlöffels 10 wird somit ein Abdruck des Zahns 1 genommen.

In Figur 6 ist ferner ein Zahnstumpen 4 gestrichelt dargestellt, welcher entsteht, wenn der Zahn 1 abgeschliffen wird. Der Abformlöffel 10 kann beispielsweise auch dazu verwendet werden, von einem solchen Zahnstumpen 4 einen Abdruck zu nehmen. Beispielsweise kann zunächst ein Abdruck von dem Zahn 1 genommen werden, um die gewünschte Oberflächenstruktur zu erhalten. Anschließend kann der Zahn 1 abgeschliffen werden, so dass nur noch der Zahnstumpen 4 verbleibt. Dann kann ein Abdruck von dem Zahnstumpen 4 genommen werden, um beispielsweise die nötige Innenform einer Krone zum Anschluss an den Zahnstumpen 4 zu erhalten.

Bei dem Abformlöffel 10 gemäß dem sechsten Ausführungsbeispiel sind keine Ausbuchtungen mit daran angeordneter Hinterschneidung 40 vorgesehen. Stattdessen ist die Hinterschneidung 40 unmittelbar an der Außenkante 80 der Vertiefung 25 angeordnet. Auch dies führt dazu, dass die Hinterschneidung 40 Abformmaterial, welches sich zwischen dem Zahn 1 und der Innenwand 20 befindet, in vorteilhafter Weise von dem Zahn wegdrückt, wenn der Abformlöffel 10 von dem Zahn 1 weggezogen wird. Dabei kann auch davon gesprochen werden, dass die Hinterschneidung 40 eine Tasche bildet.

Bei dem Abformlöffel 10 gemäß dem sechsten Ausführungsbeispiel ist des Weiteren vorgesehen, dass ein an die Außenkante 80 angrenzender Bereich 85, in welchem auch die Hinterschneidung 40 angeordnet ist, aus einem weicheren Material ausgeführt ist als der Rest des Abformlöffels 10. Dies führt dazu, dass sich das Abformmaterial nach Entfernen des Abformlöffels 10 vom der Zahnreihe leichter aus dem Abformlöffel 10 entnehmen lässt. Außerdem führt dies zu einer angenehmeren Anlage des Abformlöffels 10 am Zahnfleisch 3.

Figur 7 zeigt eine andere Querschnittsansicht des Abformlöffels 10 gemäß dem sechsten Ausführungsbeispiel. Während Figur 6 eine Ansicht im Bereich eines Backenzahns zeigt, ist in Figur 7 eine Ansicht im Bereich eines Schneidezahns dargestellt. Bezüglich der Merkmale und der Funktionalität sei auf die Beschreibung von Figur 6 verwiesen. In Figur 7 ist insbesondere noch deutlicher zu sehen, dass die Hinterschneidungen 40 Taschen für das Abformmaterial bilden.

Nachfolgend werden mögliche Merkmale der Erfindung strukturiert wiedergegeben. Es sei darauf hingewiesen, dass es sich hierbei nicht um die Ansprüche der Anmeldung handelt. Die nachfolgenden strukturiert wiedergegebenen Merkmale können jedoch beliebig untereinander kombiniert werden und können in beliebiger Kombination in die Ansprüche der Anmeldung aufgenommen werden. Insbesondere sind nachfolgend vorteilhafte oder mögliche Ausgestaltungen, nicht jedoch die einzig möglichen Ausgestaltungen der Erfindung wiedergegeben.

Ein Abformlöffel zum Erstellen eines zu einer Zahnreihe eines menschlichen oder tierischen Kiefers komplementären Abdrucks, mit einer Innenwand, welche eine längliche gebogene Vertiefung zur Aufnahme von Abformmaterial bildet, wobei die Innenwand zumindest eine Hinterschneidung aufweist.

Ein wie zuvor ausgeführter Abformlöffel, wobei die Hinterschneidung an einer Anzahl von in der Innenwand ausgebildeten seitlichen Ausbuchtungen angeordnet ist.

Ein wie zuvor ausgeführter Abformlöffel, wobei jeweils zwei Ausbuchtungen in der Vertiefung paarweise gegenüberliegend angeordnet sind.

Ein wie zuvor ausgeführter Abformlöffel, wobei die Hinterschneidung einen oberen Abschluss der Ausbuchtungen ausbildet.

Ein wie zuvor ausgeführter Abformlöffel, wobei zumindest einige der Ausbuchtungen jeweils zu einer Außen- und/oder Innenseite des Abformlöffels hin ausgebildet sind.

Ein wie zuvor ausgeführter Abformlöffel, wobei zumindest einige der Hinterschneidungen an eine Aufwölbung der Innenwand angrenzen, welche sich zwischen der Hinterschneidung und einer Außenkante des Abformlöffels erstreckt.

Ein wie zuvor ausgeführter Abformlöffel, wobei die Hinterschneidung an einer Außenkante des Abformlöffels ausgebildet ist.

Ein wie zuvor ausgeführter Abformlöffel, wobei zwei gegenüberliegende Hinterschneidungen an gegenüberliegenden Außenkanten des Abformlöffels ausgebildet sind.

Ein wie zuvor ausgeführter Abformlöffel, wobei eine oder mehrere Hinterschneidungen und/oder an die eine oder mehrere Hinterschneidungen angrenzenden Bereiche des Abformlöffels aus einem weicheren Material als der Rest des Abformlöffels ausgebildet sind.

Ein wie zuvor ausgeführter Abformlöffel, wobei zwei gegenüberliegende Hinterschneidungen eine lichte Weite der Ausbuchtungen und/oder der Vertiefung reduzieren.

Ein wie zuvor ausgeführter Abformlöffel, wobei die Vertiefung zumindest teilweise im Wesentlichen formkomplementär zu einer menschlichen Zahnreihe ausgebildet ist.

Ein wie zuvor ausgeführter Abformlöffel, wobei die Vertiefung untenseitig eine Anzahl von Taschen aufweist.

Ein wie zuvor ausgeführter Abformlöffel, wobei zumindest einige der Taschen jeweils zumindest teilweise im Wesentlichen formkomplementär zu einem künstlichen oder natürlichen menschlichen Zahn ausgebildet sind.

Ein wie zuvor ausgeführter Abformlöffel, wobei jedem Zahn einer idealen menschlichen Zahnreihe jeweils eine Tasche zugeordnet ist.

Ein wie zuvor ausgeführter Abformlöffel, wobei zumindest einige der Taschen jeweils mehrere, bevorzugt bis zu vier Teilauswölbungen um einen zwischen diesen Teilauswölbungen mittig angeordneten, zum Inneren der Vertiefung vorstehenden Vorsprung aufweisen.

Ein wie zuvor ausgeführter Abformlöffel, wobei die Vertiefung und/oder der Abformlöffel insgesamt zumindest im Wesentlichen U-förmig ausgebildet ist.

Ein wie zuvor ausgeführter Abformlöffel, wobei dieser aus einem sterilisierbaren, insbesondere autoklavierbaren Material gebildet ist.

Ein wie zuvor ausgeführter Abformlöffel, wobei dieser ganz oder abschnittsweise aus Kunststoff, insbesondere transparentem, teiltransparentem oder eingefärbtem Kunststoff, bevorzugt Polyethylen, oder aus Metall, insbesondere aus Aluminium oder aus Stahl, bevorzugt rostfreiem Stahl, ausgebildet ist.

Ein wie zuvor ausgeführter Abformlöffel, wobei dieser im Wesentlichen einen U-förmigen Außenquerschnitt aufweist.

Ein wie zuvor ausgeführter Abformlöffel, wobei dieser ferner eine Mittenauswölbung aufweist, welche von der Vertiefung zumindest teilweise seitlich umgeben ist.

Ein wie zuvor ausgeführter Abformlöffel, wobei an der Mittenauswölbung oder an dem Abformlöffel eine Halterung, bevorzugt ein Löffelstiel, eine Greifplatte und/oder ein Steg, angebracht ist.

## Patentansprüche

1. Abformlöffel zum Erstellen eines zu einer Zahnreihe oder einem Zahnreihenabschnitt eines menschlichen oder tierischen Kiefers komplementären Abdrucks,
- mit einer Innenwand (20), welche eine längliche gebogene Vertiefung (25) zur Aufnahme von Abformmaterial bildet,
- die Innenwand (20) zumindest eine Hinterschneidung (40) aufweist und
- die Vertiefung (25) zumindest teilweise im Wesentlichen formkomplementär zu der Zahnreihe oder dem Zahnreihenabschnitt ausgebildet ist,
wobei
die Vertiefung untenseitig eine Anzahl von Taschen (30) aufweist, und
die Hinterschneidung (40) an einer Mehrzahl von in der Innenwand (20) ausgebildeten seitlichen Ausbuchtungen (32) angeordnet ist und
o die Hinterschneidung (40) einen oberen Abschluss der Ausbuchtungen (32) ausbildet,
o wobei die Ausbuchtungen (32) in Form seitlicher Taschen ausgebildet sind, die derart ausgebildet sind, dass sie Abformmaterial aufnehmen können,
o wobei die Hinterschneidung (40) über eine Mehrzahl von benachbarten Ausbuchtungen (32) ausgebildet ist,
o wobei die Ausbuchtungen (32) auf gleicher Höhe liegen und
o wobei jede Ausbuchtung (32) einem Zahn der Zahnreihe zugeordnet ist.

2. Abformlöffel nach Anspruch 1, **dadurch gekennzeichnet, dass** jeweils zwei Ausbuchtungen (32) in der Vertiefung (25) paarweise gegenüberliegend angeordnet sind.

3. Abformlöffel nach einem der vorhergehenden Ansprüche, **dadurch gekennzeichnet, dass** zumindest einige der Ausbuchtungen (32) jeweils zu einer Außen- und/oder Innenseite des Abformlöffels (10) hin ausgebildet sind.

4. Abformlöffel nach einem der vorhergehenden Ansprüche, **dadurch gekennzeichnet, dass** zumindest einige der Hinterschneidungen (40) an eine Aufwölbung (90) der Innenwand (20) angrenzen, welche sich zwischen der Hinterschneidung (40) und einer Außenkante (80) des Abformlöffels (10) erstreckt.

5. Abformlöffel nach einem der vorhergehenden Ansprüche, **dadurch gekennzeichnet, dass** die Hinterschneidung (40) an einer Außenkante (80) des Abformlöffels (10) ausgebildet ist.

6. Abformlöffel nach einem der vorhergehenden Ansprüche, **dadurch gekennzeichnet, dass** zwei gegenüberliegende Hinterschneidungen (40) an gegenüberliegenden Außenkanten (80) des Abformlöffels (10) ausgebildet sind.

7. Abformlöffel nach einem der vorhergehenden Ansprüche, **dadurch gekennzeichnet, dass** eine oder mehrere Hinterschneidungen (40) oder an die eine oder mehrere Hinterschneidungen (40) angrenzenden Bereiche (85) des Abformlöffels (10) aus einem weicheren Material als der Rest des Abformlöffels (10) ausgebildet sind.

8. Abformlöffel nach einem der vorhergehenden Ansprüche, **dadurch gekennzeichnet, dass,** zumindest einige der Taschen (30) jeweils zumindest teilweise im Wesentlichen formkomplementär zu einem künstlichen oder natürlichen menschlichen Zahn (1) ausgebildet sind oder jedem Zahn (1) einer idealen menschlichen Zahnreihe jeweils eine Tasche (30) zugeordnet ist.

9. Abformlöffel nach einem der vorhergehenden Ansprüche, **dadurch gekennzeichnet, dass** zumindest einige der Taschen (30) jeweils mehrere, bevorzugt bis zu vier Teilauswölbungen (30a, 30b, 30c, 30d) um einen zwischen diesen Teilauswölbungen (30a, 30b, 30c, 30d) mittig angeordneten, zum Inneren der Vertiefung (25) vorstehenden Vorsprung (31) aufweisen.

10. Abformlöffel nach einem der vorhergehenden Ansprüche, **dadurch gekennzeichnet, dass** dieser aus einem sterilisierbaren, insbesondere autoklavierbaren und insbesondere im Mundraum verwendbaren Material gebildet ist und/oder dieser ganz oder abschnittsweise aus Kunststoff, insbesondere transparentem, teiltransparentem oder eingefärbtem Kunststoff, oder aus Metall, insbesondere aus Stahl, bevorzugt rostfreiem Stahl oder Metalllegierungen, oder Kombinationen aus den vorgenannten, ausgebildet ist.

11. Abformlöffel nach einem der vorhergehenden Ansprüche, **dadurch gekennzeichnet, dass** dieser ferner eine Mittenauswölbung (50) aufweist, welche von der Vertiefung (25) zumindest teilweise seitlich umgeben ist.

12. Abformlöffel nach Anspruch 11, **dadurch gekennzeichnet, dass** an der Mittenauswölbung (50) oder an dem Abformlöffel (10) eine Halterung (60, 70, 75), bevorzugt ein Löffelstiel, eine Greifplatte und/oder ein Steg, angebracht ist.

13. Abformlöffel nach einem der vorhergehenden Ansprüche, **dadurch gekennzeichnet, dass** dieser zum Erstellen eines zu einer Zahnreihe oder einem Zahnreihenabschnitt eines menschlichen oder tierischen Unter- oder Oberkiefers komplementären Abdrucks vorgesehen ist.

14. Abformlöffel nach einem der vorhergehenden Ansprüche, **dadurch gekennzeichnet, dass** der Abformlöffel als Abformlöffelabschnitt zum Erstellen eines zu einem Abschnitt der Zahnreihe oder einer Zahngruppe komplementären Abdrucks ausgebildet ist.

## Claims

1. Impression tray for creating an impression complementary to a tooth row or a partial tooth row of a human or animal jaw,
- having an inner wall (20) which forms an elongated curved recess (25) for the reception of impression material,
- the inner wall (20) has at least one undercut (40) and
- the recess (25) is formed at least partially substantially so as to be complementary in shape to the tooth row or the partial tooth row,
wherein the recess has a number of pockets (30) at the bottom side, and
the undercut (40) is arranged at a plurality of lateral indentations (32) formed in the inner wall (20) and
o the undercut (40) forms an upper termination of the indentations (32),
o wherein the indentations (32) are designed in the shape of lateral pockets which are configured such that they are able to accommodate impression material,
∘ wherein the undercut (40) is formed by way of a plurality of adjacent indentations (32),
∘ wherein the indentations (32) lie at the same height and
∘ wherein each indentation (32) is assigned to a tooth of the tooth row.

2. Impression tray according to claim 1, **characterised in that** in each case two indentations (32) are arranged in the recess (25) so as to lie opposite one another in pairs.

3. Impression tray according to any of the preceding claims, **characterised in that** at least some of the indentations (32) are shaped in each case towards an outer and/or inner side of the impression tray (10).

4. Impression tray according to any of the preceding claims, **characterised in that** at least some of the undercuts (40) adjoin on a bulge (90) of the inner wall (20) which extends between the undercut (40) and an outer edge (80) of the impression tray (10).

5. Impression tray according to any of the preceding claims, **characterised in that** the undercut (40) is formed on an outer edge (80) of the impression tray (10).

6. Impression tray according to any of the preceding claims, **characterised in that** two opposite undercuts (40) are formed on opposite outer edges (80) of the impression tray (10).

7. Impression tray according to any of the preceding claims, **characterised in that** one or several undercuts (40), or regions (85) of the impression tray (10) adjoining on the one or several undercuts (40), are formed from a softer material than the remainder of the impression tray (10).

8. Impression tray according to any of the preceding claims, **characterised in that** at least some of the pockets (30) are shaped in each case at least partially so as to be substantially complementary in shape to an artificial or natural human tooth (1) or in each case one pocket (30) is assigned to each tooth (1) of an ideal human tooth row.

9. Impression tray according to any of the preceding claims, **characterised in that** at least some of the pockets (30) have in each case several, preferably up to four partial bulges (30a, 30b, 30c, 30d) around a projection (31) protruding to the interior of the recess (25) and arranged centrally between these partial bulges (30a, 30b, 30c, 30d).

10. Impression tray according to any of the preceding claims, **characterised in that** this is formed of a material which can be sterilised, in particular autoclaved, and in particular used in the mouth and/or is formed entirely or in portions from plastic, in particular transparent, partially-transparent or coloured plastic, or from metal, particularly steel, preferably rust-free steel or metal alloys, or combinations of the aforementioned materials.

11. Impression tray according to any of the preceding claims, **characterised in that** this furthermore has a central bulge (50) which is surrounded laterally at least partially by the recess (25).

12. Impression tray according to claim 11, **characterised in that** a holder (60, 70, 75), preferably a spoon handle, a gripping plate and/or a web is mounted on the central bulge (50) or on the impression tray (10).

13. Impression tray according to any of the preceding claims, **characterised in that** this is provided for creating an impression complementary to a tooth row or a tooth row portion of a human or animal lower or upper jaw.

14. Impression tray according to any of the preceding claims, **characterised in that** the impression tray is designed as an impression tray portion for creating an impression complementary to a portion of the tooth row or to a tooth group.

## Revendications

1. Porte-empreinte pour la mise en œuvre d'une empreinte complémentaire à une rangée de dents ou une section de rangée de dents d'une mâchoire humaine ou animale,
- avec une paroi intérieure (20) qui forme une cavité (25) pliée oblongue pour la réception de matériau pour empreinte,
- la paroi intérieure (20) présente au moins une contre-dépouille (40) et
- la cavité (25) est réalisée au moins partiellement de manière sensiblement complémentaire en forme à la rangée de dents ou la section de rangée de dents,
dans laquelle la cavité présente côté inférieur un nombre de poches (30), et
la contre-dépouille (40) est agencée au niveau d'une pluralité de renflements (32) latérales réalisées dans la paroi intérieure (20) et
- la contre-dépouille (40) réalise une terminaison supérieure des renflements (32),
- dans laquelle les renflements (32) sont réalisés sous la forme de poches latérales qui sont réalisées de telle manière qu'elles puissent recevoir du matériau pour empreinte,
- dans laquelle la contre-dépouille (40) est réalisée par le biais d'une pluralité de renflements (32) contigus,
- dans laquelle les renflements (32) se trouvent à hauteur identique et
- dans laquelle chaque renflement (32) est associé à une dent de la rangée de dents.

2. Porte-empreinte selon la revendication 1, **caractérisé en ce que** respectivement deux renflements (32) sont agencés dans la cavité (25) par paire à l'opposé.

3. Porte-empreinte selon l'une quelconque des revendications précédentes, **caractérisé en ce qu'**au moins certains des renflements (32) sont réalisés respectivement vers un côté extérieur et/ou intérieur du porte-empreinte (10).

4. Porte-empreinte selon l'une quelconque des revendications précédentes, **caractérisé en ce qu'**au moins certaines des contre-dépouilles (40) sont contigües à un bombement (90) de la paroi intérieure (20) qui s'étend entre la contre-dépouille (40) et une arête extérieure (80) du porte-empreinte (10).

5. Porte-empreinte selon l'une quelconque des revendications précédentes, **caractérisé en ce que** la contre-dépouille (40) est réalisée au niveau d'une arête extérieure (80) du porte-empreinte (10).

6. Porte-empreinte selon l'une quelconque des revendications précédentes, **caractérisé en ce que** deux contre-dépouilles (40) opposées sont réalisées au niveau d'arêtes extérieures (80) opposées du porte-empreinte (10).

7. Porte-empreinte selon l'une quelconque des revendications précédentes, **caractérisé en ce qu'**une ou plusieurs contre-dépouilles (40) ou des zones (85) contigües à l'une ou plusieurs contre-dépouilles (40) du porte-empreinte (10) sont réalisées en un matériau plus mou que le reste du porte-empreinte (10).

8. Porte-empreinte selon l'une quelconque des revendications précédentes, **caractérisé en ce qu'**au moins certaines des poches (30) sont réalisées respectivement au moins partiellement de manière sensiblement complémentaire en forme à une dent (1) humaine artificielle ou naturelle ou respectivement une poche (30) est associée à chaque dent (1) d'une rangée de dents humaines idéale.

9. Porte-empreinte selon l'une quelconque des revendications précédentes, **caractérisé en ce qu'**au moins certaines des poches (30) présentent respectivement plusieurs, de préférence jusqu'à quatre convexités partielles (30a, 30b, 30c, 30d) autour d'une saillie (31) agencée entre ces convexités partielles (30a, 30b, 30c, 30d) au milieu, dépassant vers l'intérieur de la cavité (25).

10. Porte-empreinte selon l'une quelconque des revendications précédentes, **caractérisé en ce que** celui-ci est formé en un matériau stérilisable, en particulier autoclavable et utilisable en particulier dans l'espace buccal et/ou celui-ci est réalisé entièrement ou par section en matière plastique, en particulier en matière plastique transparente, partiellement transparente ou colorée, ou en métal, en particulier en acier, de préférence en acier inoxydable ou alliages métalliques, ou des combinaisons des matériaux précités.

11. Porte-empreinte selon l'une quelconque des revendications précédentes, **caractérisé en ce que** celui-ci présente de plus une convexité médiane (50) qui est entourée au moins partiellement latéralement par la cavité (25).

12. Porte-empreinte selon la revendication 11, **caractérisé en ce qu'**un support (60, 70, 75), de préférence un bras de porte-empreinte, une plaque de préhension et/ou une nervure, est monté au niveau de la convexité médiane (50) ou au niveau du porte-empreinte (10).

13. Porte-empreinte selon l'une quelconque des revendications précédentes, **caractérisé en ce que** celui-ci est prévu pour la mise en œuvre d'une empreinte complémentaire à une rangée de dents ou une section de rangée de dents d'une mâchoire inférieure ou supérieure humaine ou animale.

14. Porte-empreinte selon l'une quelconque des revendications précédentes, **caractérisé en ce que** le porte-empreinte est réalisé comme section de porte-empreinte pour la mise en oeuvre d'une empreinte complémentaire à une section de la rangée de dents ou un groupe de dents.
